(19) Europäisches Patentamt
European Patent Office
Office européen des brevets

(11) **EP 3 008 351 B1**

(12) **FASCICULE DE BREVET EUROPEEN**

(45) Date de publication et mention
de la délivrance du brevet:
**22.08.2018 Bulletin 2018/34**

(21) Numéro de dépôt: **14734883.3**

(22) Date de dépôt: **11.06.2014**

(51) Int Cl.:
*F16B 5/02* *(2006.01)*          *B64D 29/06* *(2006.01)*
*F16B 41/00* *(2006.01)*

(86) Numéro de dépôt international:
**PCT/FR2014/051418**

(87) Numéro de publication internationale:
**WO 2014/199081 (18.12.2014 Gazette 2014/51)**

(54) **DISPOSITIF DE FIXATION DE DEUX PIECES ENTRE ELLES**

VORRICHTUNG ZUR VERBINDUNG VON ZWEI TEILEN

DEVICE FOR FIXING TWO PARTS TOGETHER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.06.2013 FR 1355399**

(43) Date de publication de la demande:
**20.04.2016 Bulletin 2016/16**

(73) Titulaire: **Safran Aircraft Engines
75015 Paris (FR)**

(72) Inventeur: **BOEDOT, Bertrand
F-77550 Moissy-Cramayel Cedex (FR)**

(74) Mandataire: **Gevers & Orès
41 avenue de Friedland
75008 Paris (FR)**

(56) Documents cités:
**WO-A1-2009/048356      FR-A1- 2 909 974
GB-A- 1 045 122          US-A- 1 755 590
US-A- 3 018 127**

## Description

### Domaine technique :

L'invention concerne un dispositif de fixation de deux pièces entres elles. Elle concerne plus particulièrement les écrous utilisés pour fixer des équipements sur la structure d'une turbomachine ou toute autre application mécanique nécessitant un assemblage boulonné, et leur manipulation lors des opérations de maintenance.

### Exposé de l'art antérieur :

Des équipements tels que des capteurs sont fixés dans la nacelle d'une turbomachine. Par exemple, pour fixer une sonde prenant la forme d'un cylindre devant traverser la paroi, on l'équipe d'une bride et on positionne la bride en insérant les orifices de la bride autour de goujons prévus à cet effet sur la paroi. On visse ensuite sur ces goujons des écrous plats.
Cette solution présente des risques lors de la maintenance. En effet, il s'avère que l'endroit où est positionné l'équipement présente une accessibilité réduite. Cela augmente le danger de laisser échapper l'écrou non engagé dans le goujon lors d'une mauvaise manipulation. Cela peut avoir des conséquences graves car on se trouve parfois dans l'impossibilité d'aller le rechercher au fond de la nacelle.

On connaît une solution avec des écrous captifs ou prisonniers (FR 2 909 974 A) mais dans ce cas leur rotation est bloquée et ce sont les boulons que l'on fait tourner. Cette solution n'est pas applicable dans le cas précité, car les goujons sont fixés sur la surface interne de la nacelle. Il est donc nécessaire de pouvoir faire tourner les écrous.
On connait au moins une autre possibilité qui consiste à emprisonner l'écrou dans un capot soudé à la bride. Dans ce cas l'écrou comporte une base large qui appuie sur la bride lorsque l'écrou est serré sur le goujon et une partie cylindrique faisant saillie sur laquelle on peut appliquer un outil de serrage. Le capot comporte un trou dont émerge la partie cylindrique de l'écrou adaptée à l'outil de serrage. Cette solution est acceptable en ce qu'elle permet de serrer l'écrou tout en étant assuré de ne pas le perdre lorsqu'il est dévissé du goujon. Par contre, si l'écrou est détérioré, il est impossible de le remplacer facilement, sans défaire, voire détruire, le système d'emprisonnement.
L'invention propose une solution de mise en oeuvre simple lors de la maintenance pour avoir un écrou imperdable et libre en rotation que l'on peut serrer avec un outil conventionnel et que l'on peut facilement remplacer en cas de détérioration.

### Présentation de l'invention :

A cet effet, l'invention concerne un dispositif de fixation de deux pièces entre elles, une première pièce comportant une bride de fixation comprenant au moins un orifice de passage d'une tige filetée, portée par ou solidaire d'une deuxième pièce, et des moyens pour rendre l'écrou imperdable vis-à-vis de la bride avant son vissage sur la tige filetée, caractérisé en ce que ces moyens sont de type à filetage, l'écrou comportant un tronçon à filetage externe destiné à être vissé dans un tronçon à taraudage interne de l'orifice de la bride ou d'un élément rapporté sur la bride et à traverser complètement ce tronçon à taraudage interne jusqu'à être logé dans une cavité de retenue axiale de l'écrou, qui autorise une libre rotation de l'écrou avant son vissage sur la tige filetée.

Selon l'invention, le taraudage interne correspondant au fait d'avoir pratiqué un filetage, par exemple au moyen d'un taraud, à l'intérieur du tronçon de l'orifice ou de l'élément, l'écrou est rendu captif de la bride en le vissant dans l'orifice de la bride ou de l'élément porté par la bride, jusqu'à ce que le tronçon à filetage externe de l'écrou soit dégagé du tronçon à taraudage interne. Le tronçon fileté de l'écrou est alors logé et retenu dans la cavité, qui autorise une libre rotation de l'écrou afin que ce dernier puisse être vissé sur la tige filetée.

Avantageusement, la cavité est délimitée à une extrémité axiale par une extrémité axiale du tronçon à taraudage interne et à son extrémité opposée par la deuxième pièce ou une partie de la bride ou de l'élément rapporté sur la bride.

Ainsi l'écrou peut coopérer, d'une part avec la bride ou l'élément rapporté pour assurer sa retenue axiale vis-à-vis de la bride et, d'autre part avec le tronçon fileté de la bride ou de l'élément rapporté pour assurer sa retenue axiale dans l'autre sens. Le fait que la deuxième pièce limite éventuellement la cavité qui autorise une libre rotation permet de serrer l'écrou sur la tige filetée lorsque la bride est en position sur la deuxième pièce sans qu'il y ait d'interaction entre cette deuxième pièce et l'écrou qui perturbe le serrage de l'écrou sur la tige filetée.

Avantageusement, l'orifice ou l'élément rapporté sur la bride, comporte un premier tronçon à taraudage interne et un deuxième tronçon non fileté dont le diamètre interne est supérieur à celui du premier tronçon.

Lorsque l'épaisseur de la bride le permet, ce dispositif peut ainsi être facilement réalisé en effectuant un filetage dans une partie de l'orifice, de section adaptée au filetage externe de l'écrou mobile et en élargissant le reste de l'orifice. En variante, un support annulaire fixé à la bride peut servir de cage pour emprisonner l'écrou, ce support comportant un taraudage interne à son extrémité opposée à la bride.

Dans un premier mode de réalisation, l'écrou comprend des moyens d'appui sur la bride qui sont séparés axialement du tronçon à filetage externe par une partie intermédiaire dont le diamètre externe est inférieur celui du diamètre externe de ce tronçon à filetage externe.

Cela peut correspondre au fait d'ajouter une partie cylindrique à un écrou standard et de faire un filetage externe à distance adéquate sur cette partie. Cet écrou est adapté au cas où le tronçon à taraudage interne de l'orifice est effectué dans l'épaisseur de la bride.

Avantageusement, la partie intermédiaire de l'écrou a une dimension axiale supérieure à celle du tronçon à taraudage interne sur la bride. Cela permet au tronçon à filetage externe de l'écrou de tourner sans frottement dans la cavité.

Avantageusement, les moyens d'appui comprennent une collerette annulaire externe dont au moins une partie périphérique externe a en section une forme polygonale destinée à coopérer avec un outil de vissage de l'écrou.

De préférence, les moyens d'appui ont un diamètre supérieur à celui du deuxième tronçon non fileté.

Avantageusement, l'écrou peut comporter un premier tronçon creux interne apte à laisser passer la tige filetée en permettant une rotation libre de l'écrou autour de ladite tige filetée avant de la visser dans un deuxième tronçon creux à filetage interne de l'écrou.

Cela permet d'engager le goujon dans l'écrou avant de procéder au serrage, donc de positionner la bride avant serrage en centrant les écrous sur les goujons.

De préférence, la distance axiale sur l'écrou entre ledit deuxième tronçon creux à filetage interne et le tronçon à filetage externe est supérieure à la longueur de la partie intermédiaire.

De manière encore plus préférentielle, la somme de la hauteur de la cavité dans l'orifice de la bride et de la distance axiale sur l'écrou, entre ledit deuxième tronçon creux à filetage interne et le tronçon à filetage externe, est supérieure à la longueur de la tige filetée du goujon au-dessus de la surface du support.

Cette disposition permet de dévisser l'écrou du goujon sans l'engager dans le tronçon fileté de l'orifice de la bride, tout en maintenant la bride plaquée contre le support. De cette manière, il est possible de dévisser les écrous de la bride sans risquer de les perdre parce qu'ils auraient pu sortir de la bride au moment du dévissage.

L'invention concerne également un écrou pour un tel dispositif, comprenant une première extrémité axiale comportant un tronçon à filetage externe, une seconde extrémité axiale configurée pour coopérer avec un outil de vissage de l'écrou et comportant une surface d'appui transversale extérieure tournée vers la première extrémité axiale, une cavité axiale débouchant d'un côté sur la première extrémité axiale et de l'autre côté sur un tronçon axial à taraudage interne, la section transversale de ladite cavité étant supérieure à celle dudit tronçon, caractérisé en ce que le tronçon à filetage interne est séparé du tronçon à taraudage interne par une distance supérieure à la distance qui le sépare de la surface d'appui transversale.

L'invention concerne aussi un équipement aéronautique, notamment une turbomachine, comprenant au moins deux pièces reliées par au moins un tel dispositif. De préférence, il s'agit d'une turbomachine, telle qu'un turboréacteur ou un turbopropulseur d'avion comportant une nacelle, la première pièce étant un équipement, tel qu'un capteur, et la deuxième pièce étant une partie de la nacelle de la turbomachine.

L'invention concerne également un procédé de fixation de deux pièces dans une machine, au moyen d'un tel dispositif, caractérisé en ce qu'il comprend les étapes consistant à :

- visser le tronçon à filetage externe de l'écrou dans le tronçon à taraudage interne jusqu'à ce que ce tronçon à filetage externe soit engagé et retenu axialement dans la cavité,
- positionner la première pièce sur la deuxième pièce de sorte que l'écrou soit aligné sur l'axe de la tige filetée et soit prêt à être vissé sur cette dernière et
- visser l'écrou sur la tige filetée au moyen d'un outil de vissage, jusqu'à ce que l'écrou prenne appui sur la bride.

**Description d'un mode de réalisation de l'invention :**

L'invention sera mieux comprise et ses avantages et caractéristiques apparaîtront plus clairement sur les exemples décrits ci-après, plus en détail, en référence aux dessins annexés sur lesquels :

La figure 1 montre une coupe radiale d'un premier mode de réalisation de l'écrou et de la bride selon l'invention, l'écrou étant en position monté sur la bride et serré sur le goujon.
La figure 2 montre une autre coupe radiale du premier mode réalisation de l'écrou et de la bride selon l'invention, l'écrou étant en position libre sur la bride et dévissé du goujon.
La figure 3 montre une coupe radiale d'un deuxième mode de réalisation de l'écrou et de la bride selon l'invention, l'écrou étant en position monté sur la bride et serré sur le goujon.
La figure 4 montre une coupe radiale d'une variante du premier mode de réalisation de l'écrou et de la bride selon l'invention, l'écrou étant en position monté sur la bride et serré sur le goujon.
La figure 5 montre une autre coupe radiale de la même variante du premier mode réalisation de l'écrou et de la bride selon l'invention, l'écrou étant en position libre sur la bride et dévissé du goujon.
Les figures 6a et 6b montrent une vue en perspective d'un écrou utilisé pour la variante correspondant aux figures 4 et 5, entier ou coupé suivant un plan méridien.

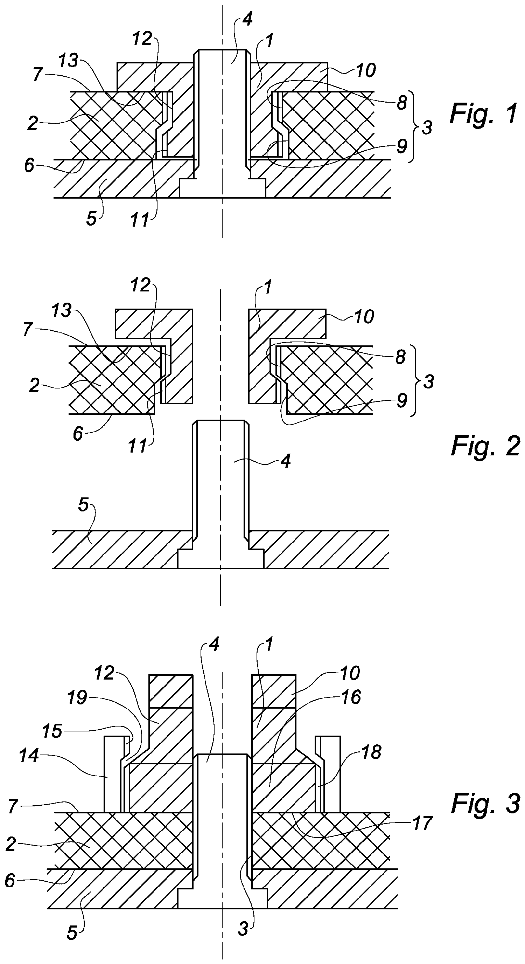

Dans un premier mode de réalisation représenté sur les figures 1 et 2, l'écrou 1 selon l'invention est associé à une bride 2 conformée pour s'adapter à la surface sur laquelle elle doit être fixée et percée d'orifices 3 centrés sur la position de tiges filetées 4 (goujons) intégrées au support 5. Les goujons 4 ont une forme cylindrique à section circulaire et ont un filetage externe de manière à coopérer avec l'écrou 1.

Autour de l'orifice 3, l'épaisseur de la bride 2 est inférieure à la hauteur du goujon 4 faisant saillie hors de la surface du support 5. La surface interne 6 de la bride 2, tournée vers la surface du support 5, épouse cette dernière, et sa surface externe 7, du côté opposé, est plate de façon à former un épaulement sur lequel vient appuyer l'écrou 1.

L'orifice 3 comporte deux tronçons cylindriques, 8 et 9, de sections transverses circulaires et de diamètres supérieurs à celui du goujon devant les traverser. Le tronçon 8 situé du côté de la face externe 7 présente un taraudage interne.

Dans le présent document, la notion de filetage ou de taraudage fait référence à un ou des filets de matière s'enroulant de manière hélicoïdale sur une surface cylindrique, intérieure ou extérieure, en faisant un nombre de tours déterminé. La hauteur des filets de ce filetage ou de ce taraudage ayant une importance pour l'invention, il sera précisé dans la suite du document, lorsque c'est nécessaire, si le diamètre d'un tronçon fileté ou taraudé est mesuré au bord du filetage ou taraudage, sur l'extrémité libre des filets de matières, ou dans le creux des filets du filetage ou taraudage.

Le tronçon à taraudage interne 8 a un diamètre, au creux des filets, au plus égal à celui du tronçon large 9, situé du côté de la face de la bride devant s'appliquer sur le support 5. De préférence, la longueur du tronçon à taraudage interne 8 est inférieure à la moitié de l'épaisseur de la bride 2 mais elle est suffisante pour que les filets intérieurs s'étendent sur au moins un tour.

L'écrou mobile 1 adapté à la bride 2 et au goujon 4 se présente sous la forme d'un cylindre creux avec une tête 10 plate à une de ses extrémités et un tronçon avec un filetage externe 11 à l'autre extrémité. L'axe de ce cylindre est l'axe de l'écrou 1.

La cavité interne de ce cylindre creux présente une section circulaire de diamètre égal à celui du goujon 4 et sa surface présente un taraudage adapté à celui du goujon 3 pour pouvoir visser l'écrou 1 dessus. La surface externe du tronçon cylindrique intermédiaire 12 compris entre la tête 10 et le tronçon à filetage externe 11 a une section circulaire de diamètre inférieur à celui de la section du tronçon supérieur 8 de l'orifice 3 de la bride 1 au bord des filets de son taraudage.

La tête 10 de l'écrou 1 est conformée pour recevoir un outil de serrage. Elle a par exemple un contour polygonal correspondant aux normes en vigueur pour un outillage standard de maintenance tel qu'une clé plate. De manière alternative, c'est un motif sur l'extrémité transversale de la tête 10 qui permet de l'adapter à d'autres types d'outils. De plus, la face transversale 13 de la tête 10 de l'écrou 1, tournée vers le tronçon intermédiaire 12, est plate et a un diamètre supérieur celui des deux tronçons, 8 et 9, de l'orifice de la bride 2. Ce diamètre est suffisant pour que cette surface 13 de la tête 10 procure un appui solide contre la face externe 7 de bride 2 lorsque l'écrou 1 est serré sur le goujon 4.

Le tronçon à filetage externe 11, situé à l'extrémité de l'écrou 1 opposée à la tête 10, a un diamètre, au creux de son filetage, égal à celui du tronçon à taraudage interne 8 de l'orifice 3, au bord des filets de son taraudage, et les deux filetages sont adaptés pour pouvoir visser l'écrou 1 dans le tronçon à taraudage interne 8 de l'orifice 3. Cette extrémité à filetage externe 11 correspond donc à un bourrelet par rapport au tronçon cylindrique intermédiaire 12 de l'écrou 1. Dans la pratique cette surépaisseur correspond au jeu nécessaire pour adapter la bride 2 sur l'ensemble des goujons 4 mais reste limitée pour maintenir le centrage de cette bride 2 sur une position déterminée. Dans une variante de réalisation, le diamètre du tronçon fileté 11 au creux de son filetage, celui du tronçon cylindrique intermédiaire 12 de l'écrou 1 et celui du tronçon à taraudage interne 8 de l'orifice 3, au bord des filets de son taraudage, sont ajustés. Ce sont alors les filets des filetages et des taraudages, grâce à leur hauteur par rapport aux surfaces de l'écrou 1 et de l'orifice 3, qui réalisent l'interface permettant de bloquer la translation de l'écrou 1 vers l'extérieur de la bride 2.

Pour que le tronçon à filetage externe 11 de l'écrou 1 puisse se dégager du tronçon à taraudage interne 8 de l'orifice 3 lors de son vissage, le tronçon cylindrique intermédiaire 12 sur l'écrou 1 a une longueur supérieure à la distance, dans l'orifice 3 de la bride 2, entre la face externe 7 de la bride 2 et le bord opposé du tronçon à taraudage interne 8. De préférence, le tronçon à filetage externe 11 de l'écrou 1 a une longueur, le long de l'axe de l'écrou 1, inférieure à la dimension axiale du tronçon non fileté 9 de l'orifice 3 de la bride 2. De plus, la somme des longueurs de ce tronçon à filetage externe 11 et du tronçon cylindrique intermédiaire 12 de l'écrou 1 est avantageusement inférieure à l'épaisseur de la bride 2 au niveau de l'orifice 3. De préférence également, la longueur du tronçon à filetage externe 11 sur l'écrou 1 est inférieure à celle du tronçon à taraudage interne 8 de l'orifice 3.

Cette configuration de l'écrou 1 et de la bride 2 permet de réaliser trois situations d'intérêt pour les opérations de maintenance.

La première situation correspond à la position montée, où l'écrou 1 a été vissé sur le goujon 4 jusqu'au serrage. Comme on peut le voir sur la figure 1, dans cette position la surface transversale d'appui 13 de la tête 10 de l'écrou 1 est en appui sur la surface externe 7 de la bride 2, cette dernière appuyant sur la surface du support 5. Le tronçon non fileté 9 de l'orifice 3 de la bride 2 forme une cavité délimitée à une de ses extrémités axiales par le tronçon à taraudage interne 8 et à l'autre extrémité par la surface du support 5. Compte tenu des longueurs du tronçon cylindrique intermédiaire 12 et du tronçon à filetage externe 11 de l'écrou 1, l'extrémité de l'écrou 1 opposée à la tête 10 n'appuie pas sur la surface du support 5 et ne perturbe donc pas la fonction de serrage qu'exerce la face d'appui 13 de la tête 10 de l'écrou 1 en appuyant sur la bride 2. Il faut aussi noter que dans cette position, il n'y a pas d'interaction entre le tronçon à filetage externe 11 de l'écrou 1 et le tronçon à taraudage interne 8 de l'orifice 3. On peut donc tourner librement l'écrou 1 dans la cavité formée par le tronçon non fileté 9 de l'orifice 3 pour le visser et le dévisser sur le goujon 4 de manière libre par rapport à ces interfaces.

Dans une variante, le tronçon à filetage externe 11 de l'écrou n'est pas situé complètement à l'extrémité opposée à la tête 10 de l'écrou 1. Par contre, il en est proche et la distance hors tout de l'extrémité de l'écrou 1 à la face 13 de la tête 10 appuyant sur la bride 2 reste inférieure à l'épaisseur de la bride 2.

Par ailleurs, l'écrou 1 étant parfaitement centré sur le goujon 4, les défauts de centrage de la bride 2, lorsque les écrous sont serrés, sont limités par le plus petit des écarts de diamètre entre l'écrou 1 et l'orifice 3. Dans l'exemple de réalisation, non limitatif, ce sont le tronçon à taraudage interne 8 de l'orifice 3 et le tronçon cylindrique intermédiaire 10 de l'écrou 1 qui se trouvent en vis-à-vis sur la plus grande distance. C'est donc l'écart entre les diamètres de ces deux éléments que l'on a intérêt à minimiser.

Dans la deuxième situation, en position libre, on manipule la bride devant son support 5, soit avant montage soit après démontage, lorsque l'écrou 1 a été complètement dévissé du goujon 4.

Comme on peut le voir sur la figure 2, dans cette position l'écrou 1 libéré du goujon 4 est libre en rotation dans l'orifice 3 de la bride 2. Par contre, la partie de l'écrou 1 située dans l'orifice 3 l'empêche de glisser latéralement contre la bride 2, la tête 10 retient l'écrou 1 axialement dans un sens et son extrémité filetée externe 11 le retient dans l'autre sens, en appuyant contre le tronçon à taraudage interne 8 de l'orifice 3 de la bride 2.

La troisième situation correspond à la position séparée, où l'on a enlevé l'écrou 1 de la bride 2, par exemple pour le remplacer.

On évolue entre la position libre et la position séparée en vissant et dévissant le tronçon à filetage externe 11 de l'écrou 1 au travers du tronçon à taraudage interne 8 de l'orifice 3 de la bride 2. Le tronçon à taraudage interne 8 de l'orifice 3 remplit la fonction d'un écrou fixe par rapport à la bride 2 dans lequel on visse l'écrou 1 mobile. De manière préférée, le filetage externe du tronçon 11 de l'écrou 1 réalise au moins un tour, comme celui du tronçon à taraudage interne 8 de l'orifice 3 de la bride 2. De cette manière le filetage réalise sa fonction de transformer un mouvement de rotation de l'écrou 1 en une translation le long de l'axe de l'orifice 3 tout en opposant une résistance de frottement à cette rotation. On ne risque donc pas de voir l'écrou 1 se désolidariser accidentellement de la bride 2 au cours d'une manipulation de cette dernière.

Dans un deuxième mode de réalisation, la bride n'a, par exemple, pas une épaisseur suffisante pour que l'on puisse créer deux tronçons de diamètres différents dans l'orifice. La configuration selon l'invention est décrite ci-dessous.

Ainsi qu'on peut le voir sur la figure 3, l'orifice de la bride 2 a une forme cylindrique simple et un diamètre sensiblement égal à celui du goujon 4 qui le traverse. Par contre, un cylindre 14 de diamètre supérieur à celui de l'orifice 3, centré sur l'axe de l'orifice 3, est fixé sur la surface externe 7 de la bride 2. La partie supérieure 15 de ce cylindre 14 présente un taraudage interne réalisant au moins un tour. Dans une variante de réalisation, les filets correspondant à ce taraudage interne peuvent se résumer à un nombre limité d'ergots, typiquement quatre, répartis sur une circonférence.

Ce tronçon à taraudage interne 15 laisse une hauteur libre entre lui et la surface externe 7 de la bride, qui forme une cavité 19 dont le diamètre est au moins égal à celui du tronçon 15, au creux des filets du taraudage interne. Cette cavité 19 est délimitée par le tronçon à taraudage interne 15 à une extrémité axiale et par la surface 7 de la bride 2 à l'autre extrémité.

La tête 10 de l'écrou 1, toujours située sur la partie supérieure, est reliée par un tronçon cylindrique intermédiaire 12 à son autre extrémité 16. Dans ce mode de réalisation, c'est la surface transverse 17 de l'extrémité 16 opposée à la tête 10 qui réalise la fonction d'appui sur la bride 2, pour la plaquer contre la surface du support 5, lorsque l'écrou 1 est serré sur le goujon 4.

Le tronçon à filetage externe 18 de l'écrou 1 est, quant à lui, positionné sur l'extrémité 16 portant la face d'appui 17 et il est apte a être vissé dans le tronçon à taraudage interne 15 du cylindre 14 entourant l'orifice. Le tronçon intermédiaire 12 et la partie non filetée de l'extrémité 16 portant le tronçon à filetage externe 18 ont un diamètre inférieur à celui du tronçon à taraudage interne 15 du cylindre 14, au bord des filets de son taraudage. La partie à taraudage interne supérieure 15 du cylindre 14 forme donc un écrou, fixe par rapport à la bride 2, dans lequel on visse l'écrou 1.

Cette fois, la distance entre la partie haute du tronçon à filetage externe 18 de l'écrou 1 et la surface d'appui 17 de sa base 16 est inférieure à la distance entre la partie basse du tronçon à taraudage interne 15 sur le cylindre 14 et la surface 7 de la bride 2. De préférence, le tronçon à filetage externe 18 est situé proche de la surface d'appui 17. De cette manière, lorsque l'écrou 1 est en position monté, il peut être desserré du goujon 4 sans qu'il y ait d'interaction entre le tronçon à filetage externe 18 de l'écrou 1 et le tronçon à taraudage interne 15 lié à la bride 2. De même, lorsque l'écrou 1 est en position libre sur la bride 2, il est maintenu dans la cavité 19 formée par le cylindre 14 fixé à la bride 2. Pour séparer l'écrou 1 de la bride 2, il faut dévisser le tronçon à filetage externe 18 du tronçon à taraudage interne 15 du cylindre 14.

Enfin, pour effectuer les opérations de serrage avec une clé plate, par exemple, il faut que le tronçon intermédiaire 10 ait une longueur suffisante qui fait dépasser la tête 10 de l'écrou 1 hors du cylindre 14. Dans une variante utilisant d'autres outils, tels qu'une clé à pipe, par exemple, il n'est pas nécessaire de faire dépasser la tête 10 hors du cylindre 14.

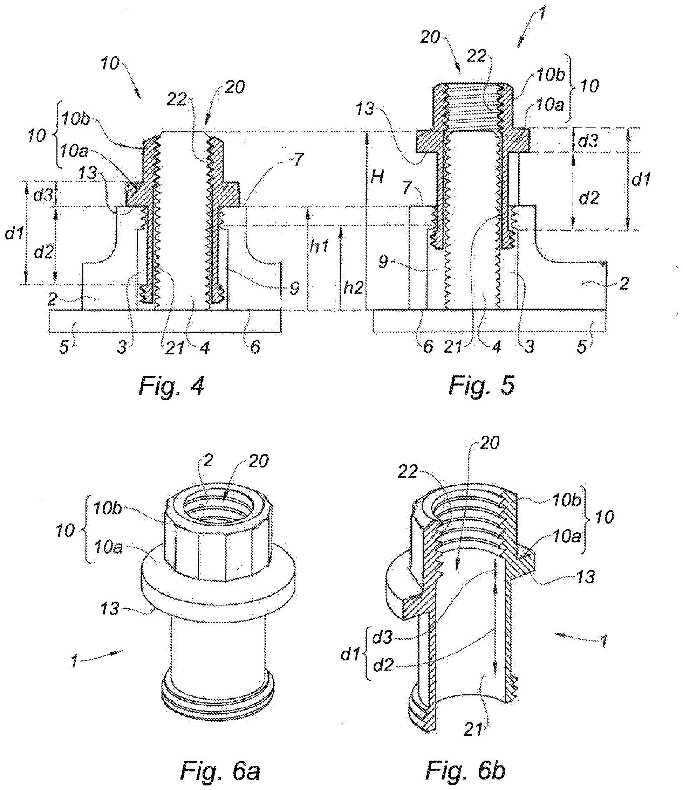

Un autre aspect de l'invention est apporté par une variante du premier mode de réalisation, décrit précédemment sur les figures 1 et 2. En référence à la figure 4, on définit une distance h1 séparant la face externe 7 de la bride 2 de la face interne 6 sur une surface correspondant à l'appui de la face transversale 13 de la tête 10 de l'écrou 1. Dans cette variante, cette distance h1 est supérieure à l'épaisseur moyenne de la bride 2. Cela permet en particulier d'augmenter la longueur axiale h2 de la cavité 9 de l'orifice 3.

Par ailleurs, l'écrou 1 présente deux particularités par rapport à la configuration précédemment décrite.

Premièrement, sa tête 10 comporte une première partie 10a qui supporte la surface d'appui 13, prolongée par une deuxième partie 10b vers l'extérieur par rapport à la bride 2. Cette extension de l'écrou 1 permet d'allonger la longueur de la cavité 20 cylindrique de l'écrou 1 dans laquelle passe la tige filetée du goujon 4.

Par ailleurs, sur l'exemple présenté, la surface extérieure de la deuxième partie 10b n'a pas le même diamètre externe que la première partie 10a. Cela peut être utilisé pour séparer les fonctions entre les deux parties 10a, 10b, de la tête 10, comme on peut le voir sur la figure 6a. La surface externe de la première partie 10a, appuyant sur la bride 2 par la surface transversale 13, est lisse, tandis que la surface externe de la deuxième partie 10b est conformée pour coopérer avec un outil de serrage.

Deuxièmement, comme on peut le voir sur la figure 6b, la cavité 20 de l'écrou 1 est divisée en deux tronçons. Un premier tronçon 21, dont la surface interne est lisse, démarre à l'extrémité de l'écrou 1 tournée vers la face interne 7 de la bride 2. Un deuxième tronçon 22, à filetage interne, part de l'extrémité de l'écrou tournée vers l'extérieur de la bride 2 pour rejoindre le premier tronçon.

Le diamètre de la section du premier tronçon 21 est légèrement supérieur à celui de la tige filetée du goujon 4. Ce premier tronçon est agencé pour que le goujon 4 puisse glisser librement à l'intérieur, tout en étant sensiblement guidé le long de l'axe de l'écrou 1.

Le filetage du deuxième tronçon 22 est, quant à lui, agencé pour coopérer avec la tige filetée du goujon 4 afin de serrer l'écrou 1 sur le goujon 4.

Cette variante permet de reproduire les trois situations de la bride 2 et de l'écrou 1 par rapport au support 5 déjà décrites : la première situation, en position montée, où l'écrou 1 est vissé sur le goujon 4 de manière à plaquer la bride 2 contre le support 5, la deuxième situation, en position libre, où l'écrou 1 est retenu sur la bride 2, séparée du support 5, et la troisième situation, en position séparée avant insertion de l'écrou 1 dans la bride 2.

On ne revient pas ici sur les deuxième et troisième situations, qui sont fondamentalement semblables à celles déjà décrites.

La première situation, illustrée sur la figure 4, présente par contre quelques caractéristiques propres à cette variante.

Tout d'abord, on note que le premier tronçon 21 de la cavité 20 de l'écrou 1 s'étend de telle sorte que le deuxième tronçon 22, dont la surface est filetée se trouve, suivant la direction axiale de l'écrou 1, à une distance d3 au-dessus de la surface transversale d'appui 13, donc également de la face externe 7 de la bride 2 autour de l'orifice 3.

Comme le goujon 4 doit pouvoir être vissé dans le deuxième tronçon 22 de l'écrou 1, cela conduit au fait que la longueur H du goujon au dessus de la face du support 5 est au moins égale à la distance h1 entre les faces externe 7 et interne 6 de la bride 2, augmentée de cette distance d3 dans l'écrou 1 :

$$(1) \qquad H > h1 + d3$$

On peut noter par ailleurs, que pour que la bride 2 soit plaquée contre la surface du support 5 lorsque l'écrou 1 est serré, il faut que la longueur d2 du tronçon cylindrique intermédiaire 12, défini précédemment sur la surface externe de l'écrou 1 entre la surface d'appui 13 et le tronçon à filetage externe 11, soit inférieure à la distance h1 entre les faces externe 7 et interne 6 de la bride 2.

$$(2) \qquad d2 < h1$$

Si l'on considère, le long de l'écrou 1, la distance d1 axiale entre le tronçon 11 ayant un filetage sur la surface externe et le tronçon 22 de la cavité 20 ayant un filetage interne, cette distance est égale à la somme de la distance d3, entre le tronçon 22 et la surface transversale d'appui 13, et de la distance d2 du tronçon 12 intermédiaire externe :

$$(3) \qquad d1 = d2 + d3$$

Enfin, la hauteur h2 de la cavité 9 de l'orifice 3 permet de donner à la longueur d2 du tronçon 12 intermédiaire extérieur de l'écrou 1 une valeur nettement supérieure à la longueur (h1-h2) du tronçon 8 à filetage interne de l'orifice 3 de la bride 2. Le tronçon 11 à filetage externe de l'écrou 1 est donc écarté du tronçon 8 à filetage interne de l'orifice 3, lorsque le dispositif est dans la première situation, d'une distance, d4 = d2 - (h1-h2) conséquente.

Cela permet de définir une quatrième situation du dispositif, illustrée sur la figure 5, où la bride 2 et son écrou 1 sont placés en position centrée sur le goujon 4, l'écrou 1 étant totalement libre en rotation par rapport au goujon 4 et à la bride 2. Sur la situation représentée, la bride 2 est de plus plaquée contre le support 5, sa face interne 6 étant au contact de celui-ci.

Cette quatrième situation présente plusieurs avantages. D'une part, elle permet de placer correctement la bride 2 sur le support 5 avant de serrer l'écrou 1. En particulier lorsqu'il y a plusieurs goujons 4 correspondant à la bride 2, on peut ainsi centrer correctement la bride 2 sur les goujons 4 du support 5 avant de serrer les écrous 1.

D'autre part, elle permet de dévisser l'écrou 1 du goujon 4 sans l'engager dans le tronçon fileté 8 de l'orifice 3 de la bride 2. On peut donc dévisser complètement l'écrou 1 du goujon 4 sans risquer de le désengager de la bride 2 en lui faisant traverser le tronçon 8 fileté de l'orifice 3. On évite ainsi des risques de perdre l'écrou 1.

En référence à la figure 6, dans cette situation, l'écrou 1 est translaté vers l'extérieur de la bride de manière à ce que le tronçon 11 fileté extérieur de l'écrou 1 soit dans la cavité 9 de l'orifice 3, près du tronçon 8 à filetage interne. La surface d'appui 13 de l'écrou 1 est donc écartée de la face externe 7 de la bride 2 d'une distance sensiblement égale ou légèrement inférieure à la distance $d4$ précédemment définie dans la première situation.

Pour que l'écrou soit également libre en rotation par rapport au goujon 4, le tronçon 22 fileté de la cavité de l'écrou doit être au-dessus de la tige filetée du goujon 4. La hauteur H du goujon 4 au dessus du support 5 doit donc être inférieure à la somme de la hauteur $h2$ de la cavité 9 de l'orifice 3 et de la distance $d1$ séparant le tronçon 11 à filetage externe du tronçon 22 à filetage interne sur l'écrou 1 :

$$(4) \qquad H < d1 + h2$$

En tenant compte de la relation (3) cela relie aussi sur l'écrou 1 la longueur $d2$ du tronçon intermédiaire à la distance $d3$ séparant le tronçon 22 à filetage interne de la surface d'appui transverse 13 par l'inégalité :

$$(5) \qquad d2 > (H - h2) - d3$$

Par ailleurs, si l'on se repère par rapport à la face externe 7 de la bride 2, la différence entre la hauteur H du goujon 4 et l'épaisseur $h1$ de la bride doit être inférieure à la distance $d4$ dont on a sorti l'écrou 1, augmentée de la distance $d3$ entre la face d'appui transversale et le tronçon 22 à filetage interne, dans la tête 10 de l'écrou 1 :

$$(6) \quad d4 + d3 > H - h1$$

Les caractéristiques de la bride 2, de l'écrou 1 et du goujon 4 sont donc liées, dans cette variante, pour permettre la réalisation de cette quatrième situation.

Si l'on considère plus particulièrement la géométrie de l'écrou, on voit que la longueur $d2$ du tronçon 12 intermédiaire extérieur doit vérifier deux inégalités opposées, la numéro (2) dans la première situation et la numéro (5), dans la deuxième situation.

Cela révèle une particularité utile de l'écrou 1 qui a été décrit dans cet exemple. Plus le tronçon 22 fileté intérieur est placé à une distance $d3$ importante au dessus de la surface d'appui transverse 13, plus il est facile de vérifier l'inégalité (5) tout en restant à l'intérieur de la limite imposée par l'inégalité (2).

Par ailleurs, la hauteur $h2$ de la cavité 9 de l'orifice 3 de la bride 2 joue également un rôle favorable pour réaliser cette variante. En effet, plus elle est importante, plus elle donne une longueur de débattement $d4$ importante pour passer de la première situation à la quatrième situation.

## Revendications

1. Dispositif de fixation de deux pièces entre elles, une première pièce comportant une bride de fixation (2) comprenant au moins un orifice (3) de passage d'une tige filetée (4), portée par ou solidaire d'une deuxième pièce (5), et des moyens pour rendre l'écrou (1) imperdable vis-à-vis de la bride (2) avant son vissage sur la tige filetée (4), **caractérisé en ce que** ces moyens sont de type à filetage, l'écrou (1) comportant un tronçon à filetage externe (11, 18) destiné à être vissé dans un tronçon à taraudage interne (8, 15) de l'orifice (3) de la bride (2) ou d'un élément rapporté (14) sur la bride (2) et à traverser complètement ce tronçon à taraudage interne (8, 15) jusqu'à être logé dans une cavité (9, 19) de retenue axiale de l'écrou (1), qui autorise une libre rotation de l'écrou (1) avant son vissage sur la tige filetée (4).

2. Dispositif selon la revendication 1, **caractérisé en ce que** la cavité (9, 19) est délimitée à une extrémité axiale par une extrémité axiale du tronçon à taraudage interne (8, 15) et à son extrémité opposée par la deuxième pièce (5) ou une partie (4) de la bride (1) ou de l'élément rapporté (12).

3. Dispositif selon la revendication 1 ou 2, **caractérisé en ce que** l'orifice (3), ou l'élément rapporté (14) sur la bride (2), comporte un premier tronçon à taraudage interne (8, 15) et un deuxième tronçon (9, 19) non fileté dont le diamètre interne est supérieur à celui du premier tronçon (8, 15).

4. Dispositif selon l'une des revendications précédentes, **caractérisé en ce que** l'écrou (1) comprend des moyens d'appui (13) sur la bride (2) qui sont séparées axialement du tronçon à filetage externe (11) par une partie intermédiaire (12) dont le diamètre externe est inférieur à celui du diamètre externe de ce tronçon à filetage externe (11).

5. Dispositif selon la revendication 4, **caractérisé en ce que** le tronçon intermédiaire (12) sur l'écrou (1) a une dimension axiale supérieure à celle du tronçon à taraudage interne (8) sur la bride (2).

6. Dispositif selon les revendications 4 ou 5, **caractérisé en ce que** les moyens d'appui comprennent une collerette annulaire externe (10) dont au moins une partie périphérique externe a en section une forme polygonale destinée à coopérer avec un outil de vissage de l'écrou (1).

7. Dispositif selon l'une des revendications 4 à 6, en dépendance de la revendication 3, **caractérisé en ce que** les moyens d'appui (13) ont un diamètre supérieur à celui du deuxième tronçon (9) non fileté.

8. Dispositif selon l'une des revendications 4 à 7, **caractérisé en ce que** l'écrou (1) comporte un premier tronçon creux interne (21) apte à laisser passer la tige filetée (4) en permettant une rotation libre de l'écrou (1) autour de ladite tige filetée avant de la visser dans un deuxième tronçon creux (22) à filetage interne de l'écrou (1).

9. Dispositif selon la revendication 8, **caractérisé en ce que** la distance axiale (d1) sur l'écrou (1) entre ledit deuxième tronçon creux à filetage interne (22) et le tronçon à filetage externe (11) est supérieure à la longueur de la partie intermédiaire (12).

10. Dispositif selon la revendication 9, **caractérisé en ce que** la somme de la hauteur (h2) de la cavité (9) dans l'orifice (3) de la bride (2) et de la distance axiale (d1) sur l'écrou (1), entre ledit deuxième tronçon creux à filetage interne (22) et le tronçon à filetage externe (11), est supérieure à la longueur (H) de la tige filetée du goujon (4) au-dessus de la surface du support (5).

11. Ecrou pour un dispositif selon l'une des revendications 8 à 10, comprenant une première extrémité axiale comportant un tronçon à filetage externe (11), une seconde extrémité axiale (10) configurée pour coopérer avec un outil de vissage de l'écrou (1) et comportant une surface d'appui transversale extérieure (13) tournée vers la première extrémité axiale, une cavité axiale (21) débouchant d'un côté sur la première extrémité axiale et de l'autre côté sur un tronçon axial (22) à taraudage interne, la section transversale de ladite cavité (21) étant supérieure à celle dudit tronçon (22), **caractérisé en ce que** le tronçon à filetage externe (11) est séparé du tronçon (22) à taraudage interne par une distance (d1) supérieure à la distance (d2) qui le sépare de la surface d'appui transversale (13).

12. Equipement aéronautique, notamment une turbomachine, comprenant au moins deux pièces reliées par au moins un dispositif selon l'une des revendications 1 à 10.

13. Turbomachine selon la revendication 12, telle qu'un turboréacteur ou un turbopropulseur d'avion, comportant une nacelle et **caractérisée en ce que** la première pièce est un équipement, tel qu'un capteur, et la deuxième pièce est une partie de la nacelle de la turbomachine.

14. Procédé de fixation de deux pièces dans une turbomachine, au moyen d'un dispositif selon l'une des revendications 1 à 10, **caractérisé en ce qu'**il comprend les étapes consistant à :

- visser le tronçon à filetage externe (11, 18) de l'écrou (1) dans le tronçon à taraudage interne (8, 15) jusqu'à ce que ce tronçon à filetage externe (11, 18) soit engagé et retenu axialement dans la cavité (9, 19),
- positionner la première pièce sur la deuxième pièce (5) de sorte que l'écrou (1) soit aligné sur l'axe de la tige filetée (4) et soit prêt à être vissé sur cette dernière, et
- visser l'écrou (1) sur la tige filetée (4) au moyen d'un outil de vissage, jusqu'à ce que l'écrou (1) prenne appui sur la bride (2).

**Patentansprüche**

1. Vorrichtung zur Verbindung von zwei Teilen miteinander, wobei ein erstes Teil einen Befestigungsflansch (2) mit mindestens einer Öffnung (3) zum Durchführen einer Gewindestange (4) aufweist, die von einem zweiten Teil (5) getragen oder mit diesem fest verbunden ist, und Mittel zum Unverlierbarmachen der Mutter (1) für den Flansch (2) vor dem Aufschrauben auf die Gewindestange (4), **dadurch gekennzeichnet, dass** diese Mittel gewindeartig sind, wobei die Mutter (1) einen Außengewindeabschnitt (11, 18) zum Einschrauben in einen Innengewindeabschnitt (8, 15) der Öffnung (3) des Flansches (2) oder eines Anbauelements (14) auf dem Flansch (2) und zum vollständigen Durchlaufen dieses Innengewindeabschnitts (8, 15), bis er in einem axialen Haltehohlraum (9, 19) der Mutter (1) aufgenommen ist, wodurch eine freie Rotation der Mutter (1) ermöglicht wird, bevor sie auf die Gewindestange (4) aufgeschraubt wird.

2. Vorrichtung nach Anspruch 1, **dadurch gekennzeichnet, dass** der Hohlraum (9, 19) an einem axialen Ende durch ein axiales Ende des Innengewindeabschnitts (8, 15) und an seinem gegenüberliegenden Ende durch das zweite Teil (5) oder einen Teil (4) des Flansches (1) oder des Anbauelements (12) begrenzt ist.

3. Vorrichtung nach Anspruch 1 oder 2, **dadurch gekennzeichnet, dass** die Öffnung (3) oder das Anbauelement (14) auf dem Flansch (2) einen ersten Innengewindeabschnitt (8, 15) und einen zweiten gewindelosen Abschnitt (9, 19) aufweist, dessen Innendurchmesser größer ist als der des ersten Abschnitts (8, 15).

4. Vorrichtung nach einem der vorstehenden Ansprüche, **dadurch gekennzeichnet, dass** die Mutter (1) Auflagemittel (13) auf dem Flansch (2) umfasst, die durch einen Zwischenteil (12), dessen Außendurchmesser kleiner ist als der Außendurchmesser des Außengewindeabschnitts (11), axial von diesem Außengewindeabschnitt (11) getrennt sind.

5. Vorrichtung nach Anspruch 4, **dadurch gekennzeichnet, dass** der Zwischenabschnitt (12) auf der Mutter (1) eine größere axiale Abmessung aufweist als der Innengewindeabschnitt (8) auf dem Flansch (2).

6. Vorrichtung nach Anspruch 4 oder 5, **dadurch gekennzeichnet, dass** die Auflagemittel einen äußeren ringförmigen Kragen (10) umfassen, von dem mindestens ein äußerer Umfangsteil eine im Querschnitt polygonale Form aufweist, die dazu bestimmt ist, mit einem Schraubwerkzeug der Mutter (1) zusammenzuwirken.

7. Vorrichtung nach einem der Ansprüche 4 bis 6, in Abhängigkeit von Anspruch 3, **dadurch gekennzeichnet, dass** die Auflagemittel (13) einen größeren Durchmesser als der zweite gewindelose Abschnitt (9) aufweisen.

8. Vorrichtung nach einem der Ansprüche 4 bis 7, **dadurch gekennzeichnet, dass** die Mutter (1) einen ersten hohlen Innenabschnitt (21) aufweist, der in der Lage ist, die Gewindestange (4) passieren zu lassen, indem er eine freie Rotation der Mutter (1) um die Gewindestange ermöglicht, bevor sie in einen zweiten hohlen Innengewindeabschnitt (22) der Mutter (1) eingeschraubt wird.

9. Vorrichtung nach Anspruch 8, **dadurch gekennzeichnet, dass** der axiale Abstand (d1) auf der Mutter (1) zwischen dem zweiten hohlen Innengewindeabschnitt (22) und dem Außengewindeabschnitt (11) größer ist als die Länge des Zwischenteils (12).

10. Vorrichtung nach Anspruch 9, **dadurch gekenn-**

**zeichnet, dass** die Summe aus der Höhe (h2) des Hohlraums (9) in der Öffnung (3) des Flansches (2) und dem axialen Abstand (d1) auf der Mutter (1) zwischen dem zweiten hohlen Innengewindeabschnitt (22) und dem Außengewindeabschnitt (11) größer ist als die Länge (H) der Gewindestange des Bolzens (4) über der Oberfläche des Trägers (5).

11. Mutter für eine Vorrichtung nach einem der Ansprüche 8 bis 10, umfassend ein erstes axiales Ende mit einem Außengewindeabschnitt (11), ein zweites axiales Ende (10), das zum Zusammenwirken mit einem Schraubwerkzeug der Mutter (1) ausgebildet ist und eine dem ersten axialen Ende zugewandte äußere Querauflagefläche (13) aufweist, einen axialen Hohlraum (21), der auf einer Seite auf das erste axiale Ende und auf der anderen Seite auf einen axialen Innengewindeabschnitt (22) mündet, wobei der Querschnitt des Hohlraums (21) größer ist als der des Abschnitts (22), **dadurch gekennzeichnet, dass** der Außengewindeabschnitt (11) von dem Innengewindeabschnitt (22) durch einen Abstand (d1) getrennt ist, der größer ist als der Abstand (d2), der ihn von der Querauflagefläche (13) trennt.

12. Luftfahrteinrichtung, insbesondere eine Turbomaschine, die mindestens zwei Teile umfasst, die durch mindestens eine Vorrichtung nach einem der Ansprüche 1 bis 10 verbunden sind.

13. Turbomaschine nach Anspruch 12, wie beispielsweise ein Turbostrahltriebwerk oder ein Turboproptriebwerk für Flugzeuge mit einer Gondel, **dadurch gekennzeichnet, dass** das erste Teil eine Einrichtung, wie beispielsweise ein Sensor, und das zweite Teil ein Teil der Gondel der Turbomaschine ist.

14. Verfahren zur Befestigung von zwei Teilen in einer Turbomaschine mittels einer Vorrichtung nach einem der Ansprüche 1 bis 10, **dadurch gekennzeichnet, dass** es die Schritte umfasst, bestehend aus:

   - Einschrauben des Außengewindeabschnitts (11, 18) der Mutter (1) in den Innengewindeabschnitt (8, 15), bis dieser Außengewindeabschnitt (11, 18) axial in dem Hohlraum (9, 19) eingerastet und gehalten wird,
   - Positionieren des ersten Teils auf dem zweiten Teil (5), so dass die Mutter (1) auf der Achse der Gewindestange (4) ausgerichtet ist und auf diese aufgeschraubt werden kann, und
   - Einschrauben der Mutter (1) mittels eines Schraubwerkzeugs auf die Gewindestange (4), bis die Mutter (1) auf dem Flansch (2) aufliegt.

## Claims

1. Device for fixing two parts together, a first part comprising a fixing flange (2) comprising at least one orifice (3) for a threaded rod (4) to pass through, supported by or rigidly connected to a second part (5), and means for making the nut (1) captive with respect to the flange (2) before it is screwed onto the threaded rod (4), **characterised in that** these means are of the type having a thread, the nut (1) comprising a portion (11, 18) having an external thread intended to be screwed into an internally tapped portion (8, 15) of the orifice (3) of the flange (2) or an element (14) attached to the flange (2), and to pass completely through this internally tapped portion (8, 15) until it is received in a cavity (9, 19) for axially retaining the nut (1), which allows free rotation of the nut (1) before it is screwed onto the threaded rod (4).

2. Device according to claim 1, **characterised in that** the cavity (9, 19) is delimited at one axial end by an axial end of the internally tapped portion (8, 15) and at its opposite end by the second part (5) or a portion (4) of the flange (1) or of the attached element (12).

3. Device according to either claim 1 or claim 2, **characterised in that** the orifice (3), or the element (14) attached the flange (2), comprises a first internally tapped portion (8, 15) and a second non-threaded portion (9, 19), the inside diameter of which is greater than that of the first portion (8, 15).

4. Device according to any of the preceding claims, **characterised in that** the nut (1) comprises means (13) for bearing on the flange (2) that are separated axially from the externally threaded portion (11) by an intermediate part (12), the outside diameter of which is less than that of the outside diameter of this externally threaded portion (11).

5. Device according to claim 4, **characterised in that** the intermediate portion (12) on the nut (1) has an axial dimension greater than that of the internally tapped portion (8) on the flange (2).

6. Device according to either claim 4 or claim 5, **characterised in that** the bearing means comprise an external annular collar (10), at least one external peripheral part of which has a polygonal shape in cross section intended to cooperate with a tool for screwing the nut (1).

7. Device according to any of claims 4 to 6, dependent on claim 3, **characterised in that** the bearing means (13) have a diameter greater than that of the second non-threaded portion (9).

8. Device according to any of claims 4 to 7, **character-** **ised in that** the nut (1) comprises a first internal hollow portion (21) able to allow the threaded rod (4) to pass through while allowing a free rotation of the nut (1) about said threaded rod before screwing said rod into a second internally threaded hollow portion (22) of the nut (1).

9. Device according to claim 8, **characterised in that** the axial distance (d1) on the nut (1) between said second internally threaded hollow portion (22) and the externally threaded portion (11) is greater than the length of the intermediate part (12).

10. Device according to claim 9, **characterised in that** the sum of the height (h2) of the cavity (9) of the orifice (3) in the flange (2) and the axial distance (d1) on the nut (1) between said second internally threaded hollow portion (22) and the externally threaded portion (11) is greater than the length (H) of the threaded rod of the stud (4) above the surface of the support (5).

11. Nut for a device according to any of claims 8 to 10, comprising a first axial end comprising an externally threaded portion (11), a second axial end (10) configured so as to cooperate with a tool for screwing the nut (1) and comprising an outer transverse bearing surface (13) turned towards the first axial end, an axial cavity (21) emerging on one side on the first axial end and on the other side on an internally tapped axial portion (22), the cross section of said cavity (21) being greater than that of said portion (22), **characterised in that** the internally threaded portion (11) is separated from the internally tapped portion (22) by a distance (d1) greater than the distance (d2) that separates it from the transverse bearing surface (13).

12. Aeronautical equipment, in particular a turbine engine, comprising at least two parts connected by at least one device according to any of claims 1 to 10.

13. Turbine engine according to claim 12, such as an aircraft turbojet engine or turboprop engine, comprising a nacelle and **characterised in that** the first part is an item of equipment such as a sensor and the second part is a portion of the nacelle of the turbine engine.

14. Method for fixing two parts in a turbine engine by means of a device according to any of claims 1 to 10, **characterised in that** it comprises the steps consisting of:

    - screwing the externally threaded portion (11, 18) of the nut (1) into the internally tapped portion (8, 15) until this externally threaded portion (11, 18) is engaged and held axially in the cavity (9, 19),
- positioning the first part on the second part (5) so that the nut (1) is aligned on the axis of the threaded rod (4) and is ready to be screwed thereon, and
- screwing the nut (1) onto the threaded rod (4) by means of a screwing tool, until the nut (1) bears on the flange (2).

Fig. 1

Fig. 2

Fig. 3

*Fig. 4*

*Fig. 5*

*Fig. 6a*

*Fig. 6b*

**EP 3 008 351 B1**

**RÉFÉRENCES CITÉES DANS LA DESCRIPTION**

**Documents brevets cités dans la description**

- FR 2909974 A